Europäisches Patentamt

European Patent Office

Office européen des brevets

(11) Veröffentlichungsnummer: **0 029 478**
**A2**

(12) # EUROPÄISCHE PATENTANMELDUNG

(21) Anmeldenummer: 80101739.3

(22) Anmeldetag: 01.04.80

(51) Int. Cl.³: **A 21 D 2/18**
**A 21 D 13/08**

(30) Priorität: 22.11.79 IT 6926279

(43) Veröffentlichungstag der Anmeldung:
03.06.81 Patentblatt 81/22

(84) Benannte Vertragsstaaten:
AT BE CH FR GB LI LU NL SE

(71) Anmelder: P. Ferrero & C. S.p.A.
Piazza Pietro Ferrero 1
Alba (Cuneo)(IT)

(72) Erfinder: Cillario, Renzo
Vorso F. Ili Bandiera 3
Alba(IT)

(74) Vertreter: Hoffmann, Klaus, Dr. rer. nat. et al,
Hoffmann . Eitle & Partner Patentanwälte
Arabellastrasse 4
D-8000 München 81(DE)

(54) Saccharosefreie Feinbackware sowie ihre Herstellung und Verwendung.

(57) Das Produkt entsteht unter Verwendung von kristalliner Fruktose und besteht aus einer zellförmigen Matrix aus lockerem, im Ofen aufgegangenen Weizenmehl mit einem Flüssigkeitsgehalt von 17 bis 22 Gew.-%. Das entsprechende Gemisch ist stark wasserhaltig und enthält auf 100 Teile Mehl 50 bis 80 Gew.-Teile Stärke, 15 bis 25 Gew.-Teile Glutin, 50 bis 60 Gew.-Teile Magermilchpulver und 50 bis 100 Gew.-Teile Eipulver. Zuerst bereitet man eine Lösung aus kristalliner Fruktose in Wasser, worin das Eipulver emulgiert wird; erst dann werden Mehl, Stärke, Glutin und Milchpulver hinzugefügt.

EP 0 029 478 A2

BEZEICHNUNG GEÄNDERT
siehe Titelseite

- 1 -

Wenig kariogene, im wesentlichen saccharosefreie Feinbackware sowie Verfahren zur Herstellung derselben unter Verwendung von Fruktose

Die Erfindung betrifft eine wenig kariogene, im wesentlichen
saccharosefreie Feinbackware, welche unter Verwendung von
Fruktose aus einem wasserreichen Teig mit einem Mehl-/Wasser-
Verhältnis von 1 : 1,5 bis 2,o, gegebenenfalls unter Zusatz
von Sorbitsirup, hergestellt wird, ein Verfahren zur Herstellung
derselben und die Verwendung der Feinbackware als diätetisches
Lebensmittel.

Der Ersatz von Saccharose durch Fruktose bzw. Fruchtzucker
in gesüssten Lebensmitteln, insbesondere Feinbackwaren, ist
aus verschiedenen diätologischen Gründen wünschenswert.

- 2 -

Der diätetische Wert der Fruktose basiert im wesentlichen auf
folgenden Faktoren:

Der Stoffwechsel der Fruktose verläuft unabhängig von Insulin.
Fruktose hat daher als Diabetikerzucker eine breite Anwendung
gefunden, nicht zuletzt deshalb, weil sie in Geschmack und
Süsskraft als angenehm empfunden wird. Ausserdem vermag Fruktose rasch und ergiebig Glycogen zu bilden, das eine schützende Funktion auf die Leber ausübt. Aus diesem Grunde eignet sich
Fruktose zur Verwendung in diätetischen Lebensmitteln für Diabetiker, aber auch in der Leber- und Altersdiät. Ein weiterer
Vorteil der Fruktose besteht darin, dass sie um 2o bis 3o %
weniger kariogen ist als Saccharose.

Ausserdem besitzt Fruktose bei Zimmertemperaturen eine höhere
Süsskraft als Saccharose, wodurch eine Reduzierung des Kohlenhydratanteiles in Lebensmitteln möglich ist. Diese Faktoren
machen Fruktose zu einem ernährungsphysiologisch wertvollen
Grundnahrungsmittel.

Für die Verarbeitung von Fruktose in Lebensmitteln, insbesondere in Feinbackwaren, kann man entweder von dem in Handel
erhältlichen Fruktosesirup oder von kristalliner Fruktose ausgehen, wobei letztere im Handel in verschiedenen Feinheitsgraden erhältich ist. Aus verarbeitungstechnischen Gründen wurde
bisher vor allem die handelsübliche 7o %-ige Fruktoselösung
verarbeitet. Diese bietet den Vorteil, dass sie im Vergleich
zu kristalliner Fuktose billiger ist, sich leichter silieren
lässt, sich im Teig besser verteilt und nicht zu der unangenehmen, häufig auftretenden Klumpenbildung führt, wie sie
bei der üblichen Verwendungsweise von kristalliner Fruktose
zu beobachten ist.

- 3 -

Fruktosesirup mit einem Fruktoseanteil von 9o % und mehr Fruktose lässt sich im Vergleich zu kristalliner Fruktose zwar leichter verarbeiten, hat jedoch den Nachteil, dass er noch andere Zuckerarten, vor allem Glukose, enthält.

Demgegenüber ist kristalline Fruktose zwar chemisch rein, wegen der stark hygroskopischen Eigenschaften des Fruchtzuckers aber nur schwer zu silieren und ausserdem schwieriger zu verarbeiten. Teige, die unter Verwendung kristalliner Fruktose hergestellt werden, sind schwer zu kneten. Ausserdem tritt häufig währen des Anteigens eine unangenehme Klumpenbildung auf, die die weitere Verarbeitung der angeteigten Masse erschwert, wenn nicht gar unmöglich macht. Diese Schwierigkeit lässt sich ausräumen, indem man die Teigmasse länger knetet. Doch kann, abgesehen vom praktischen Standpunkt, die Knetzeit nicht beliebig verlängert werden, da zu lange Knetzeiten der Teige wiederum deren Ausbackvermögen nachteilig beeinflussen.

Ein weiteres Problem bei der Verwendung von Fruktose, sei es in sirupöser oder kristalliner Form, ist die wesentlich stärkere Bräunung während des Backprozesses. Dies ist darauf zurückzuführen, dass Fruktose zur Bildung von Maillard-Reaktionen führt. Dies bedeutet, dass das Ausbacken der Teige bei niedrigeren Temperaturen als üblich durchgeführt werden muss. Dadurch ergibt sich aber der Nachteil, dass während einer bestimmten Backzeit weniger Wasser verdampft wird, was zu einem unerwünscht hohen Feuchtigkeitsgehalt im fertigen Produkt führt. Verlängerte Backzeiten führen dagegen zu einer zu starken Bräunung des Produktes oder sie sind aus verfahrenstechnologischen Gründen nicht wünschenswert. Daraus ergibt sich, dass bei Verwendung von Fruktose, insbesonder kristalliner Fruktose, die Forderung besteht, in den Teig möglichst wenig Wasser oder Flüssigkeit einzubringen und Fruktose in erster Linie zur

- 4 -

Herstellung von festeren Teigen zu verwenden.

Aufgabe der vorliegenden Erfindung ist es, ein schmackhaftes, biskuitähnliches Feingebäck sowie ein Verfahren zur Herstellung desselben aus einem wasserreichen Teig unter Verwendung von kristalliner Fruktose zur Verfügung zu stellen.

Die vorstehende Aufgabe wird erfindungsgemäss dadurch gelöst, dass ein Feingebäck geschaffen wird, das durch Anteigen des Teiges in folgenden Phasen:

a) Verrühren von kristalliner Fruktose und Wasser, gegebenenfalls unter Zusatz von Sorbitsirup und Kochsalz, bei einer Temperatur bis zu 5o°C zu einer homogenen Masse,

b) Zugabe von Ei bzw. Eipulver unter Rühren, und

c) Einrühren der restlichen Teigzutaten und weiteres Rühren, bis eine homogene Masse entstanden ist, sowie durch anschliessendes Ausbacken des Teiges bei 16o bis 22o°C erhalten wird.

Gemäss der Erfindung wird die Feinbackware aus einem Teig hergestellt, welcher in seiner Konsistenz den dünnflüssigen Waffelteigen entspricht und ein Mehl-/Wasser-Verhältnis der Teigmasse von 1 : 1,5 bis 2,o, vorzugsweise 1 : 1,6 bis 1,8 und am meisten bevorzugt von 1 : 1,7, aufweist.

Bei einem derart dünnflüssigen Teig ist es erforderlich, das Wasserbindevermögen des Mehles durch Zugaben von Stärkepulver, insbesondere Weizenstärkepulver, von Gluten und/oder von Milchpulver zu erhöhen. Dabei ist es vorteilhaft, das Stärkepulver in einer Menge von 5o bis 8o Gew.-%, vorzugsweise von 6o bis 7o Gew.-%, bezogen auf den Mehlgehalt, zuzugeben. Der Anteil von Gluten soll 15 bis 25 Gew.-%, vorzugsweise 2o Gew.-%, bezogen auf den Mehlgehalt, betragen. Gemäss der Erfindung beträgt ein bevorzugtes Verhältnis von Mehl : Stärke : Gluten
1o : 5 bis 8 : 1,5 bis 2,5.

Milchpulver, insbesondere Magermilchpulver, wird in einer Menge von 4o bis 6o Gew.-%, vorzugsweise von 5o bis 55 Gew.-%, bezogen auf Magermilchpulver, des Mehlgehaltes zugegeben. Gemäss der Erfindung ist es auch möglich, anstelle des Milchpulvers oder eines Teiles davon, Frischmilch, kondensierte oder anderweitig vorbehandelte Milch zu verwenden.

Der Fruktoseanteil im Teig liegt bei alleiniger Verwendung von Fruktose als Süssungsmittel im Bereich von ´6o bis 2oo Gew.-%, vorzugsweise bei 12o bis 16o Gew.-%, und am meisten bevorzugt bei 14o - 15o Gew.-%, bezogen auf den Mehlanteil.

Nach einer bevorzugten Ausführungsform gemäss der Erfindung verwendet man zum Süssen der Feinbackware ein Gemisch aus Fruktose und Sorbit. Sorbit wird dabei entweder als Sirup bzw. Lösung oder in kristalliner Form verwendet. Gemäss der Erfindung eignet sich besonders die Verwendung einer 7o %-igen Sorbitlösung.

Ein Vorteil bei der Verwendung eines Gemisches von Fruktose und Sorbit liegt im niedrigen Preis für Sorbit im Vergleich zu Fruktose. Aufgrund der stark laxierenden Wirkung von Sorbit kann jedoch dessen Anteil nicht zu hoch gewählt werden. Gemäss der Erfindung wird daher ein Verhältnis Fruktose : Sorbit von 1 : o,1 bis 3,o, vorzugsweise von 1,4 : 1, bezogen auf 7o %-ige Sorbitlösung, gewählt.

Gemäss der Erfindung ist es zur Vermeidung der Klumpenbildung besonders vorteilhaft, das Ei in Form von Eipulver zuzugeben. Die Menge an Eipulver liegt, bezogen auf den Mehlanteil, vorzugsweise bei 5o bis 1oo Gew.-%, besonders bevorzugt bei

- 6 -

65 bis 75 Gew.-%.

Nach einer besonderen Ausführungsform gemäss der Erfindung wird ein Gemisch von Volleipulver und pulverförmigem Eigelb in einem Verhältnis von 4o bis 7o Gew.-% : 1o bis 3o Gew.-%, bezogen auf den Mehlanteil, zugegeben. Ausserdem ist es möglich, das Eipulver bzw. einen Teil davon durch Zugabe von Frischei zu ersetzen.

Unter den weiteren Backzutaten sind insbesondere Fett und gegebenenfalls Monoglycerid zu nennen. Als Fette können die für Feinbackwaren üblicherweise verwendeten pflanzlichen und tierischen Fette bzw. Öle eingesetzt werden. Insbesondere eignet sich die Zugabe pflanzlicher Fette bzw. Öle, wie z.B. Erdnussöl, Maisöl und Kokosfett bzw. -öl. Der Fettanteil liegt vorzugsweise bei 1o bis 4o Gew.-%, besonders bevorzugt bei 15 bis 25 Gew.-%, bezogen auf den Gehalt an Mehl.

Sofern dies gewünscht wird, erfolgt eine Zugabe von Monoglycerid zur Teigmasse. Der Gehalt an Monoglycerid liegt dabei vorzugsweise bei 5 bis 2o Gew.-%, besonders bevorzugt bei 1o bis 15 Gew.-%, bezogen auf den Mehlgehalt.

Ausserdem können der Teigmasse inerte Materialien, wie Füllstoffe, Bindemittel, Streckstoffe und unverdaubare Materialien, wie Cellulosederivate, Harze und dergleichen, zugegeben werden. Auch Geschmacksstoffe, Vitamine, Minerale und andere Bestandteile, wie Emulgiermittel, künstliche Süssstoffe und dergleichen, die zur Herstellung eines schmackhaften Backproduktes zweckmässig sind, können verwendet werden.

Als Triebmittel werden die üblicherweise für Feinbackwaren verwendeten Triebmittel eingesetzt. Insbesondere eignen sich Ammonium- und Natriumcarbonate und -bicarbonate sowie handelsübliche Backpulvermischungen, die in den zum Erzielen einer lockeren Backware erforderlichen Mengen eingesetzt werden. Besonders bevorzugt ist es auch, ein Gemisch aus Ammoniumcarbonat und Backpulver zu verwenden. Nach einer bevorzugten Ausführungsform gemäss der Erfindung wird ein Gemisch aus 1 bis 5 Gew.-% Ammoniumcarbonat und 5 bis 12 Gew.-% Backpulver, bezogen auf den Anteil an Mehl, verwendet.

Gemäss der Erfindung wurde überraschenderweise festgestellt, dass die befürchtete Klumpenbildung vermieden werden kann, wenn das Anteigen des Teiges in drei Phasen, wie sie im vorstehenden Hauptanspruch aufgeführt sind, erfolgt.

Das Anrühren der kristallinen Fruktose mit Wasser im Schritt a), gegebenenfalls unter Zugabe von Sorbitsirup sowie Kochsalz, erfolgt bei einer Temperatur bis $50^{\circ}$C, vorzugsweise bei 3o bis $35^{\circ}$C. Das Gemisch wird so lange gerührt, bis eine homogene Masse entstanden ist. Die Rührzeit für diesen Schritt beträgt vorzugsweise 1o Minuten.

Im Schritt b) erfolgt die Zugabe von Eipulver bzw. Frischei unter Rühren. Nach dem Einrühren desselben wird das Rühren so lange fortgesetzt, bis eine homogene Masse entstanden ist. Die Rührzeit des Schrittes b) beträgt vorzugsweise ca. 1o Minuten.

Nach dem erfindungsgemässen Verfahren werden anschliessend in Schritt c) die restlichen Backzutaten zugegeben und die Teigmasse weitere 2o bis 3o Minuten, vorzugsweise 25 Minuten, lang gerührt.

Die gemäss der Erfindung hergestellte Teigmasse kann in einer relativ kurzen Backzeit bei einer Temperatur im Bereich von

von 160 bis 220°C, vorzugsweise bei 180 bis 200°C, ausgebacken werden. Die Backzeit beträgt dabei 5 bis 10 Minuten, vorzugsweise 9 Minuten oder bei Verwendung eines Mikrowellenofens ca. 6 Minuten.

Das Ausbacken des Teiges erfolgt gemäss der Erfindung in einem üblichen, dafür vorgesehenen Backofen. Besonders geeignet ist das Ausbacken in Turbulenzöfen u.a. mit Hilfe von Hochfrequenz. Vorteilhafterweise erfolgt das Ausbacken des gemäss der Erfindung hergestellten Teiges in einem Bandofen.

Dabei wird die Teigmasse in einer Stärke von 2,5 bis 5 mm, vorzugsweise 3,5 mm, auf das Band aufgetragen. Das Ausbacken des Teiges wird unter Berücksichtigung von Backzeit und Backtemperatur und gegenseitiger Abstimmung dieser beiden Parameter vorteilhafterweise so durchgeführt, dass der Teig auf 6 bis 10 mm, vorzugsweise 8 mm, aufgeht.

Nach einer besonderen Ausführungsform gemäss der Erfindung wird auf die aufgetragene Teigmasse getrocknetes und gemahlenes Biskuit aufgestreut. Die Menge an Biskuit beträgt dabei 80 bis 140 g/m$^2$, vorzugsweise 100 bis 115 g/m$^2$.

Nach dem Abkühlen des Teiges wird dieser zu Stücken gewünschter Grösse geschnitten, gegebenenfalls beschichtet und/oder zu Kuchen, Tortenstücken oder Plätzchen weiterverarbeitet.

Die erfindungsgemässe Feinbackware eignet sich insbesondere zur Herstellung mehrschichtiger gefüllter Tortenstücke.

Aufgrund des Fruktosegehaltes, gegebenenfalls unter Zusatz von Sorbit, eignet sich die erfindungsgemässe Feinbackware in der Diabetesdiät, in der Magen-Darm- und in der Leber-Galle-Diät. Ausserdem kann das Feingebäck gemäss der Erfindung aufgrund der geringeren Kariogenität von Fruktose, insbesondere

- 9 -

des Gemisches von Fruktose und Sorbit, als zahnschonendes Mittel verwendet werden.

Das folgende Beispiel soll die Erfindung näher erläutern, ohne diese einzuschränken. Die angegebenen Prozentsätze beziehen sich auf das Gewicht.

Beispiel

Es wurde eine Feinbackware aus einem Teig entsprechend der folgenden Zusammensetzung hergestellt:

| | |
|---|---|
| Magermilchpulver | 7,9 % |
| kristalline Fruktose | 12,9 % |
| Sorbitsirup (7o %-ig) | 9,o % |
| Erdnussöl | 2,9 % |
| Volleipulver | 7,6 % |
| Eigelbpulver | 3,2 % |
| Weizenmehl, Typ 4o5 | 14,8 % |
| Vitalkleber (Gluten) | 2,9 % |
| Weizenstärkepulver | 9,8 % |
| Salz | o,o9 % |
| Ammoniumcarbonat | o,4 % |
| Vanille | o,o9 % |
| Wasser | 24,8 % |
| Monoglycerid | O,19% |
| Backpulver | 1,3 % |

Die kristalline Fruktose, der 7o %-ige Sorbitsirup und das Kochsalz wurden bei 3 bis $35^{o}$C in Wasser gelöst und 1o Minuten lang gerührt. Daraufhin wurde die gewonnene Lösung in einen Mischbehälter eingeführt und Volleipulver und Eigelbpulver nachgefüllt und ebenfalls 1o Minuten lang gerührt. Dann wurden die restlichen Backzutaten, nämlich Monoglycerid, Erdnussöl, Weizenmehl, Weizenstärkepulver, Magermilchpulver, Vitalkleber, Ammoniumcarbonat, Vanille und Backpulver eingebracht
und die Masse ca. 25 Minuten lang gerührt.

Die Teigmasse wurde dann auf ein Backband in 3 bis 3,5 mm
Stärke aufgetragen und pro m² mit 100 bis 115 g getrocknetem
und gemahlenem Biskuit bestreut. Es folgte ein Ausbacken des
Teiges in einem Mikrowellen-Bandbackofen während einer Zeit
von 6 Minuten bei einer Temperatur von 190°C. Der ausgebackene Teig wies eine Höhe von 8 mm auf. Nach dem Abkühlen
des Teiges wurde dieser zu Stücken gewünschter Grösse geschnitten, beschichtet und zu Tortenstücken verarbeitet.

Patentansprüche

1.     Wenig kariogene, im wesentlichen saccharosefreie
Feinbackware, welche unter Verwendung von Fruktose aus
einem wasserreichen Teig mit einem Mehl-/Wasser-Verhältnis
von 1 : 1,5 bis 2,o, gegebenenfalls unter Zusatz von
Sorbitsirup, sowie üblichen Teigzutaten hergestellt wird,
dadurch   g e k e n n z e i c h n e t ,    dass diese durch
Anteigen des Teiges in folgenden Phasen:

a) Verrühren von kristalliner Fruktose und Wasser, gegebenenfalls unter Zusatz von Sorbitsirup und Kochsalz bei einer
   Temperatur bis zu 5o$^{o}$C zu einer homogenen Masse,

- 12 -

b) Zugabe von Ei bzw. Eipulver unter Rühren, und

c) Einrühren der restlichen Teigzutagen und weiteres Rühren, bis eine homogene Masse entstanden ist, sowie durch anschliessendes Ausbacken des Teiges bei 16o bis 220$^{o}$C erhalten wird.

2.      Feinbackware gemäss Anspruch 1, dadurch  g e - k e n n z e i c h n e t ,   dass das Mehl-/Wasser-Verhältnis in der Teigmasse zur Herstellung der Feinbackware 1 : 1,6 bis 1,8 beträgt.

3.      Feinbackware gemäss Anspruch 1, dadurch  g e - k e n n z e i c h n e t ,   dass das Mehl-/Wasser-Verhältnis in der Teigmasse zur Herstellung der Feinbackware 1 : 1,7 beträgt.

4.      Feinbackware gemäss Anspruch 1, dadurch  g e - k e n n z e i c h n e t ,   dass das Verhältnis Fruktose : Sorbit 1,2 bis 1,6 : 1, bezogen auf 7o %-ige Sorbitlösung, beträgt.

5.      Feinbackware gemäss Anspruch 1, dadurch  g e - k e n n z e i c h n e t ,   dass das Verhältnis Mehl : Stärke : Gluten 1o : 5 bis 8 : 1,5 bis 2,5 beträgt.

6.      Feinbackware gemäss einem oder mehreren der vorstehend genannten Ansprüche, dadurch  g e k e n n z e i c h - n e t ,   dass das Verhältnis Mehl : Milchpulver 1 : o,4 bis o,6 beträgt.

7.      Feinbackware gemäss Anspruch 1, dadurch  g e - k e n n z e i c h n e t ,   dass Schritt a) bei einer Temperatur von 3o bis 35$^{o}$C durchgeführt wird.

8. Feinbackware gemäss Anspruch 1, dadurch g e - k e n n z e i c h n e t , dass die Rührzeiten in Schritt a) und b) jeweils 1o Minuten betragen.

9. Feinbackware gemäss Anspruch 1, dadurch g e - k e n n z e i c h n e t , dass die Rührzeit in Schritt c) 25 Minuten beträgt.

1o. Feinbackware gemäss Anspruch 1, dadurch g e - k e n n z e i c h n e t , dass sie durch Ausbacken des Teiges bei einer Temperatur von 18o bis 2oo°C erhalten wird.

11. Feinbackware gemäss Anspruch 1, dadurch g e - k e n n z e i c h n e t , dass sie durch 6-minütiges Ausbacken des Teiges in einem Mikrowellenofen erhalten wird.

12. Feinbackware gemäss Anspruch 1, dadurch g e - k e n n z e i c h n e t , dass sie durch Bestreuen von 1oo bis 115 $g/m^2$ getrocknetem und gemahlenem Biskuit der auf das Backband aufgetragenen Teigmasse erhalten wird.

13. Feinbackware gemäss einem oder mehreren der voran- stehenden Ansprüche, dadurch g e k e n n z e i c h n e t , dass diese vor dem Ausbacken die folgende Teigzusammensetzung aufweist: Milchpulver 7 bis 9 %, kristalline Fruktose 1o bis 15 %, Sorbit 5 bis 1o %, Pflanzenöl 2,5 bis 3,5 %, Eipulver 1o bis 14 %, Weizenmehl 12 bis 18%, Gluten 2,5 bis 3,5 %, Stärkepulver 9 bis 11 %, Ammoniumcarbonat o,4 bis o,5 %, Wasser 23 bis 26 %, Monoglycerid(e) 0.15 bis 0,25%, Backpulver 1,2 bis 1,5 %, sowie Salz und Aromastoffe umfasst.

14.     Verfahren zur Herstellung einer Feinbackware unter Verwendung von Fruktose aus einem wasserreichen Teig, mit einem Mehl-/Wasser-Verhältnis von 1 : 1,5 bis 2,o, dadurch g e k e n n z e i c h n e t ,    dass das Anteigen und Ausbacken der Teigmasse zur Herstellung der Feinbackware in folgenden Schritten erfolgt:

a) Verrühren von kristalliner Fruktose und Wasser, gegebenenfalls unter Zusatz von Sorbit und Kochsalz,bei einer Temperatur bis 5o$^{o}$C zu einer homogenen Masse,

b) Zugabe von Ei oder Eipulver unter Rühren, und

c) Zugabe der restlichen Teigzutaten und weiteres Rühren, bis eine homogene Masse entstanden ist, sowie durch anschliessendes Ausbacken des Teiges bei einer Temperatur von 16o bis 22o$^{o}$C.

15.     Verfahren gemäss Anspruch 14, dadurch g e k e n n - z e i c h n e t ,    dass die Durchführung von Schritt a) bei einer Temperatur von 3o bis 35$^{o}$C erfolgt.

16.     Verfahren gemäss Anspruch 14, dadurch g e k e n n - z e i c h n e t ,    dass die Rührzeiten der Schritte a) und b) jeweils 1o Minuten und des Schrittes c) 25 Minuten beträgt.

17.     Verfahren gemäss Anspruch 14, dadurch g e k e n n - z e i c h n e t ,    dass die Backzeit zum Ausbacken des Teiges 8 bis 10 Minuten oder bei Verwendung eines Mikrowellenofens 6 Minuten beträgt.

18.     Verfahren gemäss Anspruch 14, dadurch g e k e n n - z e i c h n e t ,    dass die Temperatur zum Ausbacken des Teiges 18o bis 2oo$^{o}$C beträgt.

19.     Verfahren gemäss Anspruch 14, dadurch g e k e n n - z e i c h n e t ,    dass das Ausbacken des Teiges in einem Bandofen erfolgt.

2o.      Verfahren gemäss Anspruch 14, dadurch  g e k e n n -
z e i c h n e t ,   dass zum Ausbacken die Teigmasse in einer
Dicke von 3,5 mm aufgetragen wird.

21.      Verfahren gemäss Anspruch 14, dadurch  g e k e n n -
z e i c h n e t ,   dass beim Ausbacken der Teigmasse die Backzeit und die Backtemperatur so aufeinander abgestimmt werden,
dass ein Aufgehen des Teiges bis zu einer Dicke von 6 bis 1o mm
erreicht wird.

22.      Verfahren gemäss Anspruch 14, dadurch  g e k e n n -
z e i c h n e t ,   dass die auf das Backband aufgetragene
Teigmasse zur Herstellung der Feinbackware mit 1oo bis 115 $g/m^2$
getrocknetem und gemahlenem Biskuit bestreut wird.

23.      Verwendung der Feinbackware gemäss einem oder mehreren
der voranstehenden Ansprüche zur Herstellung mehrschichtiger,
gegebenenfalls gefüllter Tortenstücke, Kuchen oder Plätzchen.

24.      Verwendung der Feinbackware gemäss einem oder mehreren
der voranstehenden Ansprüche als ditätetisches Nahrungsmittel.